# EUROPEAN PATENT APPLICATION

(11) **EP 4 749 410 A1**
(43) Date of publication of application: **27.05.2026**
(21) Application number: 24843166.0
(22) Date of filing: 18.07.2024
(51) Int. Cl.: G06F 3/0346, G06F 3/01

(54) **RING-TYPE CONTROLLER AND WIRELESS COMMUNICATION SYSTEM**

(30) Priority: 18.07.2023 JP 2023117147
(71) Applicant: TDK Corporation, Tokyo 103-6128 (JP)
(72) Inventor: SETONO, Shingo, Tokyo 103-6128 (JP)
(74) Representative: Epping - Hermann - Fischer
(86) International application number: PCT/JP2024/025749
(87) International publication number: WO 2025/018377

(57) **Abstract**

A ring-type controller according to an embodiment includes: a ring portion; and a proximity sensor provided in the ring portion, wherein the proximity sensor is disposed at a position where the distance between a predetermined first finger on which the ring portion is fitted and another second finger is detectable.

## Description

### TECHNICAL FIELD

The present disclosure relates to a ring-type controller and a wireless communication system.

### BACKGROUND ART

Conventionally, as controllers for operating electronic devices, controllers that can be carried by a human or controllers that are worn on a human body in use are known.

In particular, since controllers that are worn on the human body need to be miniaturized, the operations that can be performed are limited.

A smart ring described in Patent Document 1 measures the bending or extending of a finger using a bending sensor (see Patent Document 1).

### Citation List

### Patent Document

Patent Document 1: Published Japanese Translation No. 2017-527922 of the PCT International Publication

### SUMMARY OF INVENTION

### Technical Problem

However, in the conventional technology described above, for example, when a human operates an electronic device by pointing a finger in a space such as AR (Augmented Reality) glasses, the human needs to bend and extend his or her finger. As a result, there is a problem in that the operation becomes complicated.

The present disclosure has been made in view of such circumstances and an object thereof is to provide a ring-type controller and a wireless communication system capable of simplifying a user's operation.

### Solution to Problem

According to an aspect, there is provided a ring-type controller including: a ring portion; and a proximity sensor provided in the ring portion, wherein the proximity sensor is disposed at a position where the distance between a predetermined first finger on which the ring portion is fitted and another second finger is detectable.

According to an aspect, there is provided a wireless communication system including: a ring-type controller; and a host computer configured to communicate using the wireless module.

### Advantageous Effects of Invention

According to the present disclosure, it is possible to simplify a user's operation in the ring-type controller and the wireless communication system.

### BRIEF DESCRIPTION OF DRAWINGS

[FIG. 1] A diagram showing the schematic configuration of a ring-type controller according to an embodiment.
[FIG. 2] A diagram showing an example configuration of a wireless communication system and an example configuration of a functional block of a control circuit of the ring-type controller according to the embodiment.
[FIG. 3] A diagram schematically showing a method of wearing the ring-type controller according to the embodiment.
[FIG. 4A] A diagram showing an example of a posture of a left hand wearing the ring-type controller according to the embodiment.
[FIG. 4B] A diagram showing an example of a posture of a left hand wearing the ring-type controller according to the embodiment.
[FIG. 4C] A diagram showing an example of a posture of a left hand wearing the ring-type controller according to the embodiment.
[FIG. 4D] A diagram showing an example of a posture of a left hand wearing the ring-type controller according to the embodiment.
[FIG. 5] A diagram showing a use example of the ring-type controller according to the embodiment.
[FIG. 6] A diagram showing the schematic configuration of a ring-type controller according to a second embodiment.
[FIG. 7] A diagram showing the schematic configuration of a ring-type controller according to a third embodiment.

### DESCRIPTION OF EMBODIMENTS

Hereinafter, embodiments of the present disclosure will be described with reference to the drawings.

### (First embodiment)

### [Ring-type controller]

### <Appearance of ring-type controller>

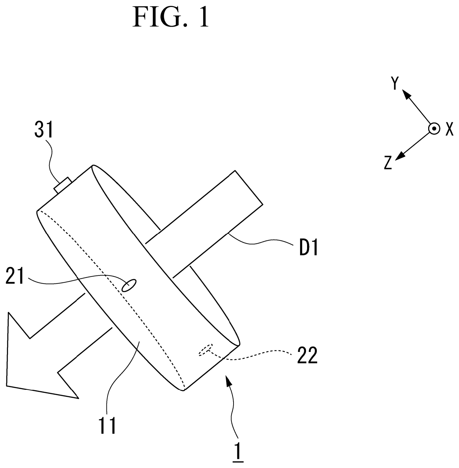

FIG. 1 is a diagram showing the schematic configuration of a ring-type controller 1 according to an embodiment. For convenience of description, FIG. 1 shows XYZ orthogonal coordinate axes, which are three-dimensional orthogonal coordinate axes. The ring-type controller 1 includes a ring portion 11, two proximity sensors 21 and 22, and one positioning portion 31.

Furthermore, in this embodiment, the ring-type controller 1 has a single ring structure. The ring-type controller 1 may be referred to as, for example, a ring device or the like.

Further, the ring portion may be simply referred to as, for example, a ring or the like.

Further, the names of the other components in this embodiment are also examples for the purpose of description, and may be referred by any other names.

The ring portion 11 has a ring shape.

Here, the ring shape of the ring portion 11 is not particularly limited, and may be, for example, a shape such as a circular shape or an elliptical shape.

In the present embodiment, the ring portion 11 has a circular shape when it is projected onto the XY plane. The ring portion 11 has a hole portion penetrating the central portion of the circular shape in parallel to the Z axis.

In the present embodiment, the ring portion 11 is, for example, a portion with a one-step configuration.

Each of two proximity sensors 21 is disposed on the outer peripheral side surface of the ring portion 11. Two proximity sensors 21 are disposed on the side surface with a predetermined interval therebetween. The predetermined interval may be expressed, for example, as a rotation angle around the central axis of the circular shape of the ring portion 11, or may be expressed as a distance on the outer peripheral side surface of the ring portion 11.

The positioning portion 31 is disposed on the outer peripheral side surface of the ring portion 11.

The positioning portion 31 is disposed on the side surface to be away from the proximity sensor 21 by a predetermined interval. In this case, the positioning portion 31 is similarly disposed on the side surface to be away from the proximity sensor 22 by a predetermined interval.

Here, the shape of the positioning portion 31 is not particularly limited, and may have, for example, a protruding shape such as a cube or sphere, or may have any decorative shape. The decoration may be, for example, letters, numbers, symbols, or any other design.

Further, the shape of the positioning portion 31 may be, for example, a shape that protrudes from the outer peripheral side surface of the ring portion 11, or a shape that is engraved on the outer peripheral side surface of the ring portion 11.

In this embodiment, the positioning portion 31 indicates the position on the finger (in this embodiment, the index finger of the left hand) on which the ring-type controller 1 is worn by the user (human).

In other words, in this embodiment, the user wears the ring-type controller 1 on a predetermined finger of a predetermined hand of the user so that the positioning portion 31 is positioned at a predetermined location when the ring-type controller 1 is worn on a predetermined finger of a predetermined hand of the user.

In this embodiment, an example in which the ring-type controller 1 is worn on the index finger of the user's left hand is shown.

FIG. 1 shows a direction D1 in which the index finger of the left hand is inserted into the ring portion 11.

In this embodiment, when the ring-type controller 1 is inserted into the index finger of the user's left hand, the ring-type controller 1 is inserted into the index finger so that the positioning portion 31 is disposed above the index finger.

In this case, the proximity sensor 21 detects whether or not the middle finger of the user's left hand is in proximity.

Further, the proximity sensor 22 detects whether or not the thumb of the user's left hand is in proximity.

Here, the position determined by the positioning portion 31 is not particularly limited, and does not necessarily have to be above the finger on which the ring-type controller 1 is worn, but may be, for example, below or to the side of the finger on which the ring-type controller 1 is worn.

### <Control circuit>

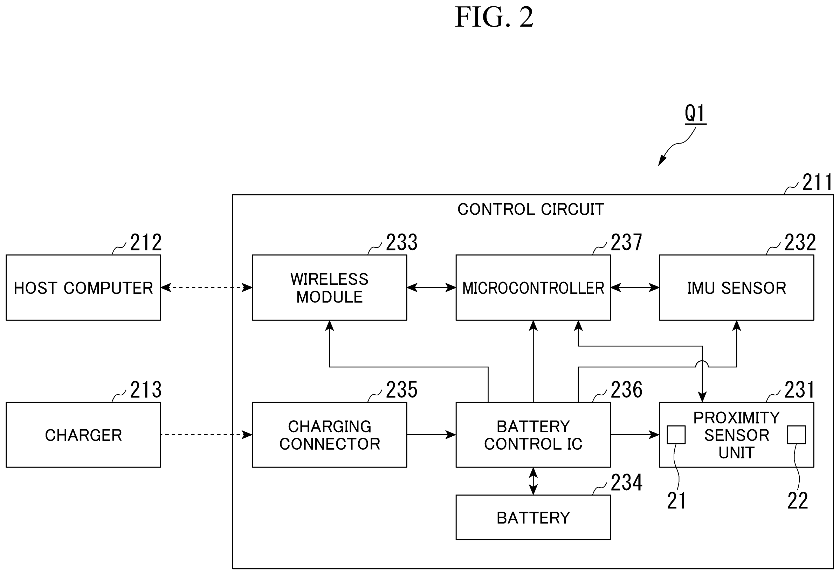

FIG. 2 is a diagram showing an example configuration of a wireless communication system Q1 and an example configuration of a functional block of a control circuit 211 of the ring-type controller 1 according to the embodiment.

The wireless communication system Q1 includes the ring-type controller 1, a host computer 212, and a charger 213.

In this embodiment, the host computer 212 and the charger 213 are external devices of the ring-type controller 1.

The control circuit 211 is provided in the ring-type controller 1.

Furthermore, for example, the charger 213 may be considered not to be included in the wireless communication system Q1.

In this embodiment, the ring-type controller 1 transmits, for example, various instructions and various information to the host computer 212 by wirelessly communicating with the host computer 212.

The host computer 212 acquires various instructions or various information on the basis of the information received from the ring-type controller 1.

The charger 213 supplies power to the ring-type controller 1.

Here, the host computer 212 may be any device, such as a personal computer (PC), a smartphone, AR glasses, or VR (Virtual Reality) glasses.

Further, various types of charger 213 may be used.

The control circuit 211 includes a proximity sensor unit 231, an IMU (Inertial Measurement Unit) sensor 232, a wireless module 233, a battery 234, a charging connector 235, a battery control IC (Integrated Circuit) 236, and a microcontroller (also referred to as a microcomputer in this embodiment for convenience of description) 237.

In this embodiment, the proximity sensor unit 231 includes a proximity sensor 21 and a proximity sensor 22.

Each of the proximity sensors 21 and 22 of the proximity sensor unit 231 functions as a distance measurement sensor.

The proximity sensor 21 detects information regarding the degree of proximity to a predetermined finger (in this embodiment, the middle finger of the left hand). The degree may be, for example, information indicating the distance to the finger.

The proximity sensor 22 detects information regarding the degree of proximity to a predetermined finger (in this embodiment, the thumb of the left hand). The degree may be, for example, information indicating the distance to the finger.

The proximity sensor unit 231 transmits information regarding the detection result of the proximity sensor 21 (detection information) and information regarding the detection result of the proximity sensor 22 (detection information) to the microcomputer 237.

The proximity sensor unit 231 is controlled by the microcomputer 237.

Furthermore, the detection may also be referred to as, for example, gauging or measurement. Further, the detection information may be referred to as, for example, gauging information or measurement information. Further, the detection information may be also referred to as, for example, a detection value, a gauging value, or a measurement value.

Further, various information may be referred to as, for example, data.

The IMU sensor 232 includes, for example, an acceleration sensor and a gyro sensor. The IMU sensor 232 detects information according to the movement of the hand wearing the ring-type controller 1.

The IMU sensor 232 transmits information regarding the detection result (detection information) to the microcomputer 237.

The IMU sensor 232 is controlled by the microcomputer 237.

Furthermore, the IMU sensor 232 may include, for example, any one of the acceleration sensor and the gyro sensor.

The wireless module 233 wirelessly communicates with the host computer 212.

The wireless communication method is not particularly limited, and may be, for example, Bluetooth (registered trademark).

The wireless module 233 is controlled for transmission and reception by the microcomputer 237.

The battery 234 is, for example, a secondary battery, and is capable of charging and supplying power.

Here, the battery 234 may be configured to be detachable from the main body of the ring-type controller 1 (in the example of FIG. 2, the part of the ring-type controller 1 other than the battery 234), or may be integrated not to be detachable.

Furthermore, a replaceable primary battery may be used as the battery 234. In this case, the charger 213 and the charging connector 235 may not be provided. In this case, for example, the battery 234 may be considered to be an external component of the ring-type controller 1.

The charging connector 235 receives power supplied from the charger 213 and supplies the power to a battery control IC 236.

Furthermore, the charging connector 235 and the charger 213 may be configured to supply power contactlessly, or may be configured to supply power via a wire, for example. When power is supplied via a wire between the charging connector 235 and the charger 213, power may be supplied, for example, when the ring-type controller 1 is not being worn by the user.

The battery control IC 236 controls charging of the battery 234 and power supply from the battery 234.

In this embodiment, the battery control IC 236 uses the power charged in the battery 234 to supply power to each of the proximity sensor unit 231, the IMU sensor 232, the wireless module 233, and the microcomputer 237.

Further, the battery control IC 236 charges the battery 234 using power supplied from the charging connector 235.

The microcomputer 237 performs various processes and controls.

The microcomputer 237 communicates information with the host computer 212 via the wireless module 233.

The microcomputer 237 receives information regarding the detection result (detection information) from the proximity sensor unit 231.

The microcomputer 237 receives information regarding the detection result (detection information) from the IMU sensor 232.

The microcomputer 237 transmits an instruction to the host computer 212 according to the user's operation content, for example, on the basis of one or both of the information from the proximity sensor unit 231 and the information from the IMU sensor 232.

Here, the microcontroller 237 may, for example, determine an instruction corresponding to the user's operation on the basis of both information from the proximity sensor unit 231 and information from the IMU sensor 232, or may determine an instruction corresponding to the user's operation on the basis of any one of the information from the proximity sensor unit 231 and information from the IMU sensor 232.

Further, as another example, the microcomputer 237 may transmit one or both of the information from the proximity sensor unit 231 and the information from the IMU sensor 232 to the host computer 212 without specifying an instruction according to the user's operation. In this case, the host computer 212 identifies an instruction corresponding to the user's operation on the basis of the information received from the microcomputer 237.

Furthermore, when a series of processes are performed by the microcomputer 237 and the host computer 212, the processes performed by the microcomputer 237 and the processes performed by the host computer 212 may be divided arbitrarily.

As an example, the microcomputer 237 may transmit to the host computer 212 information on the detection results (for example, distance) of the proximity sensors 21 and 22, or information on the presence or absence of proximity acquired from the detection results.

Further, as an example, the microcomputer 237 may transmit to the host computer 212 information on the detection results (for example, one or both of acceleration and angular velocity) from the IMU sensor 232, or information on the movement obtained from the detection results (for example, information such as the distance moved by the ring-type controller 1).

As another example, the microcomputer 237 may generate predetermined information on the basis of the detection results of the proximity sensor unit 231 and the IMU sensor 232 and transmit the information to the host computer 212.

For example, the predetermined information may be information for display, in which case the host computer 212 displays the information received from the microcomputer 237 via the wireless module 233 on the screen.

The microcomputer 237 or the host computer 212 may determine whether or not a predetermined finger (the middle finger of the left hand in this embodiment) is close to the proximity sensor 21 on the basis of, for example, detection information from the proximity sensor 21. In this case, for example, the detection information is information on the distance (separation distance) from the finger, and may be determined that the finger is in close proximity if the distance from the finger is equal to or smaller than a predetermined threshold (or is smaller than the predetermined threshold), and that the finger is not in close proximity in other cases.

Similarly, the microcomputer 237 or the host computer 212 may determine whether or not a predetermined finger (the thumb of the left hand in this embodiment) is close to the proximity sensor 22 on the basis of, for example, detection information from the proximity sensor 22. In this case, for example, the detection information is information on the distance (separation distance) from the finger, and may be determined that the finger is in close proximity if the distance from the finger is equal to or smaller than a predetermined threshold (or is smaller than the predetermined threshold), and that the finger is not in close proximity in other cases.

Furthermore, the threshold values of the proximity sensors 21 and 22 may be the same or different, for example.

In this embodiment, the proximity sensors 21 and 22 are disposed at different locations (positions) on the ring portion 11 that are separated from each other.

Further, the components of the ring-type controller 1 shown in FIG. 2 other than the proximity sensors 21 and 22 may be disposed together at one location on the ring portion 11, or may be disposed separately in multiple separate locations on the ring portion 11. When these components are disposed together at one location on the ring portion 11, this location may be, for example, the same location as any one of the two proximity sensors 21 and 22, or may be a different location from the two proximity sensors 21 and 22.

### <Control of control circuit from host computer>

A configuration in which a predetermined instruction (control data) is transmitted from the host computer 212 to the microcomputer 237 of the control circuit 211 may be used.

The instruction may be an instruction to sleep. For example, a sleep instruction may be given from the host computer 212 to the microcomputer 237 via the wireless module 233 at a desired timing. In this case, upon receiving the instruction, the microcomputer 237 puts all or part of the control circuit 211 into a sleep state.

Furthermore, in the sleep state, for example, power consumption is reduced. In this case, the sleep state may be called a power saving state.

### [User operation contents]

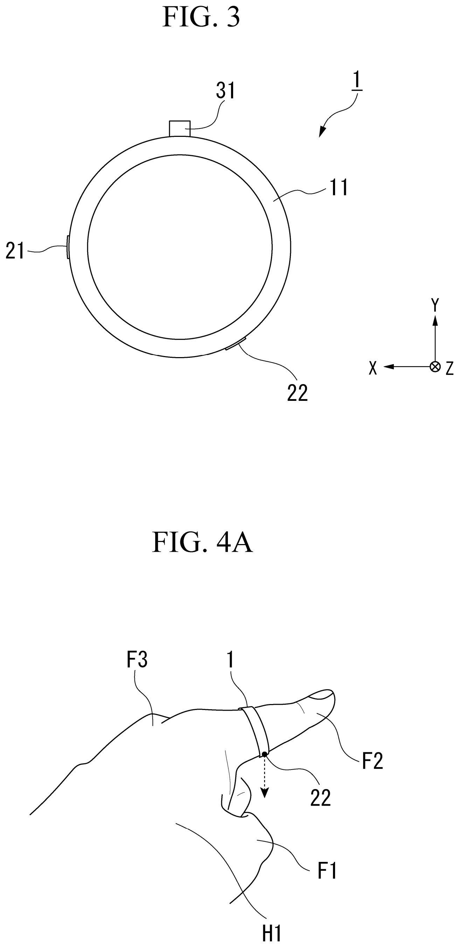

FIG. 3 is a diagram schematically showing a method of wearing the ring-type controller 1 according to the embodiment.

For convenience of description, FIG. 3 shows XYZ orthogonal coordinate axes similar to those in FIG. 1.

FIG. 3 shows the ring-type controller 1 from the viewpoint of looking at the hole in the ring portion 11 of the ring-type controller 1.

In this embodiment, the ring-type controller 1 is worn on the index finger of the user's left hand by inserting the index finger in the direction from the front side to the back side of the paper surface of FIG. 3.

In this case, the proximity sensor 21 is placed at a position where the proximity sensor can detect whether the middle finger of the user's left hand is close to the index finger.

Further, the proximity sensor 22 is disposed at a position where the proximity sensor can detect whether the thumb of the user's left hand is close to the index finger.

Therefore, the microcomputer 237 or the host computer 212 can identify an instruction corresponding to the user's operation content on the basis of the detection results of the two proximity sensors 21 and 22.

Here, in this embodiment, in the example of FIG. 3, the proximity sensor 21 is disposed at a position 90° (or approximately 90°) to the left (left side in FIG. 3) of the positioning portion 31 in the ring portion 11 when viewed from the negative side to the positive side of the Z axis. That is, in this embodiment, the position of the positioning portion 31 and the position of the proximity sensor 21 are offset by 90° (or approximately 90°) in terms of the rotation angle when the central axis of the circular shape of the ring portion 11 is the center.

Further, in this embodiment, in the example of FIG. 3, the proximity sensor 22 is disposed at a position approximately 90 to 180° (for example, 157.5° or 135°) to the right (right side in FIG. 3) of the positioning portion 31 of the ring portion 11 when viewed from the negative side to the positive side of the Z axis. That is, in this embodiment, the position of the positioning portion 31 and the position of the proximity sensor 22 are offset by approximately 90 to 180° in terms of the rotation angle when the central axis of the circular shape of the ring portion 11 is the center.

In this way, in this embodiment, the positions of the proximity sensors 21 and 22 are offset by an angle in the range of about 90° to 180° (for example, 112.5° or 135°) in terms of the rotation angle around the central axis of the circular shape of the ring portion 11. Furthermore, the arrangement of each component (for example, rotation angle position) shown in this embodiment is an example for description purposes and is not necessarily an exact value, and any practically effective arrangement of each component may be used.

### <Example of user operation content>

Referring to FIGS. 4A to 4D, an example of a user operation content is shown.

In the examples of FIGS. 4A to 4D, the ring-type controller 1 is worn on the index finger F2 of the user's left hand H1.

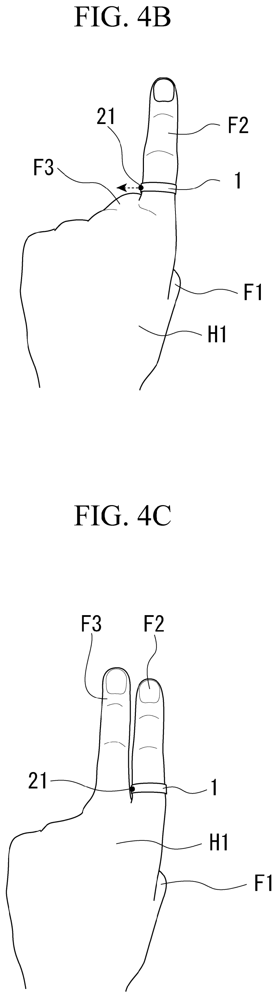

FIGS. 4A and 4B are diagrams showing an example of the posture of the left hand H1 wearing the ring-type controller 1 according to the embodiment.

FIGS. 4A and 4B are diagrams showing the same posture of the left hand H1 as viewed from different viewpoints.

In the example of FIG. 4A, the user is in a pointing posture with only the index finger F2 of the left hand H1 extended.

In this case, it is determined that the middle finger F3 of the user's left hand H1 is not close to the index finger F2 on the basis of the detection result of the proximity sensor 21, and it is determined that the thumb F1 of the user's left hand H1 is not close to the index finger F2 on the basis of the detection result of the proximity sensor 22.

FIG. 4C is a diagram showing an example of the posture of the left hand H1 wearing the ring-type controller 1 according to this embodiment.

In the example of FIG. 4C, the user extends the index finger F2 and the middle finger F3 of the left hand H1 in a pointing posture with two fingers.

In this case, it is determined that the middle finger F3 of the user's left hand H1 is close to the index finger F2 on the basis of the detection result of the proximity sensor 21, and it is determined that the thumb F1 of the user's left hand H1 is not close to the index finger F2 on the basis of the detection result of the proximity sensor 22.

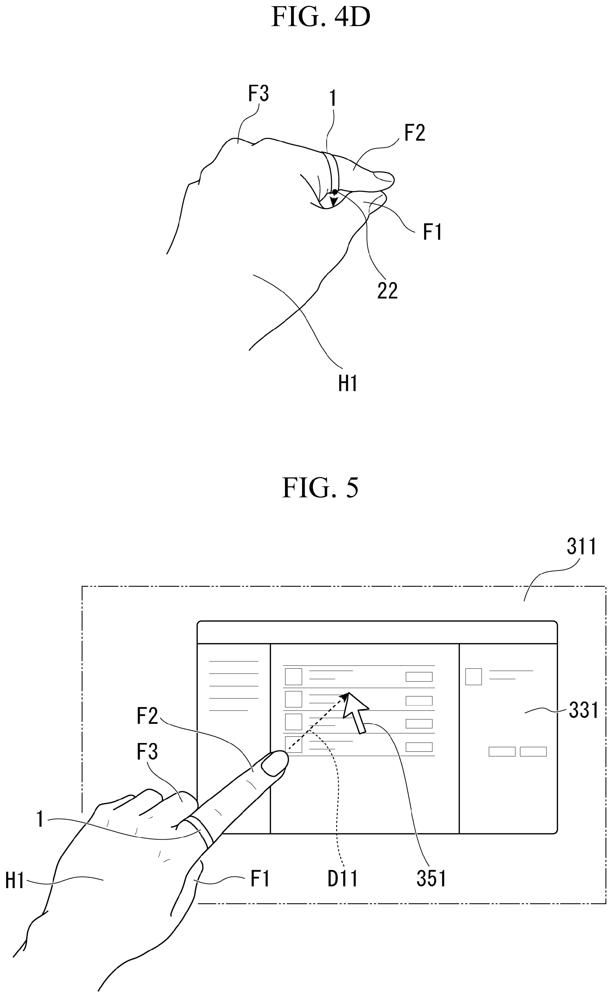

FIG. 4D is a diagram showing an example of the posture of the left hand H1 wearing the ring-type controller 1 according to the embodiment.

In the example of FIG. 4D, the user assumes a posture for performing a grasping operation such that the index finger F2 and the middle finger F3 of the left hand H1 touch and the index finger F2 and the thumb F1 extend to touch.

In this case, it is determined that the middle finger F3 of the user's left hand H1 is close to the index finger F2 on the basis of the detection result of the proximity sensor 21, and it is determined that the thumb F1 of the user's left hand H1 is close to the index finger F2 on the basis of the detection result of the proximity sensor 22.

Furthermore, the user's operation contents shown in FIGS. 4A to 4D are examples, and any posture may be used as the posture of the left hand H1 for determining the user's operation contents.

For example, the examples of FIGS. 4A to 4D show a case where the user's operation content is identified on the basis of the detection results of the proximity sensors 21 and 22 in accordance with the posture of the user's left hand H1, but as another example, the user's operation content may be identified on the basis of both the detection results of the proximity sensors 21 and 22 and the detection results of the IMU sensor 232.

### <Use example of ring-type controller>

FIG. 5 is a diagram showing a use example of the ring-type controller 1 according to the embodiment.

FIG. 5 shows a screen 331 projected onto a wall 311 by the function of a projector.

The image on the screen 331 includes an image of an operation target 351.

In the example of FIG. 5, the screen 331 is a projection of the screen processed by the host computer 212. Further, in the example of FIG. 5, the operation target 351 is a cursor that can be moved on the screen 331.

Further, FIG. 5 shows the ring-type controller 1 and the user's left hand H1 wearing the ring-type controller 1. The ring-type controller 1 is worn on the index finger F2 of the left hand H1.

In the example of FIG. 5, when the user positions the left hand H1 in a predetermined posture, an instruction corresponding to that position can be sent to the host computer 212 via the ring-type controller 1. In the example of FIG. 5, the posture is a posture in which the tip of the index finger F2 is pointed in a predetermined direction D11.

The host computer 212 executes various processes on the basis of the instructions received from the ring-type controller 1 (user operations). The process is not particularly limited, and may be, for example, a process related to a target pointed by the cursor, or a process to move the cursor. The host computer 212 identifies a process corresponding to the user's operation content on the basis of the relationship (for example, relative position or the like) between the screen generated by the host computer 212 (in this example, the screen 331 displayed on the wall 311) and the user's operation content, and executes the process.

Furthermore, in this embodiment, the case where the content of the user operation is notified from the ring-type controller 1 to the host computer 212 is shown, but as another example, the content of the user operation may be identified by the microcomputer 237 of the ring-type controller 1, and the microcomputer 237 may execute a process according to the content of the operation.

Further, in this embodiment, an example is given in which a predetermined screen (the screen 331 in the example of FIG. 5) is projected onto the wall 311, but as another example, a configuration in which such a screen is projected onto one or both sides of glasses worn by the user may be used.

As described above, in the ring-type controller 1 according to this embodiment, it is possible to simplify the user (human)'s operation. For example, the user can perform intuitive operations by pointing at the space projected on the wall 311 or AR glasses.

For example, the user can operate or control an electronic device (in this embodiment, the host computer 212) by wearing the ring-type controller 1 on the fingers of the hand and positioning the hand in a predetermined posture.

The user can simplify the operation of the user interface by, for example, bringing the finger wearing the ring-type controller 1 close to another finger.

Further, the user can easily operate the user interface by, for example, bringing the finger wearing the ring-type controller 1 close to two or more other fingers.

By referring to the positioning portion 31, the user can visually and easily recognize how to wear the ring-type controller 1.

In the ring-type controller 1 according to this embodiment, since the information regarding the detection results of the proximity sensors 21 and 22 can be transmitted to the host computer 212, for example, the host computer 212 can accurately determine the position of a predetermined finger relative to the finger of the user wearing the ring-type controller 1 (for example, whether or not that finger is in proximity).

For example, in a configuration in which the detection result of each sensor (in this embodiment, the proximity sensors 21 and 22 and the IMU sensor 232) is transmitted from the ring-type controller 1 to the host computer 212, accurate information regarding the position of the ring-type controller 1 and the like can be presented to the host computer 212.

Here, in the examples of FIGS. 4A to 4D and FIG. 5, the ring-type controller 1 is described as being worn on the fingers of the user's left hand, but the same applies to an example in which the ring-type controller is worn on the fingers of the user's right hand.

For example, the ring-type controller worn on the fingers of the user's right hand may have a configuration that is symmetrical to the ring-type controller 1 worn on the fingers of the user's left hand, or may have a different configuration.

In this embodiment, the ring-type controller 1 worn on the index finger is illustrated as an example, but as another example, a ring-type controller worn on a finger other than the index finger may be implemented. As a specific example, a configuration may be used in which the ring-type controller 1 is worn on the middle finger of a predetermined hand of the user, and the degree of proximity between the middle finger and other fingers is detected by a proximity sensor. In this case, the other fingers may be, for example, one or more of the index finger, ring finger, or thumb.

The locations where the two proximity sensors 21 and 22 and the positioning portion 31 are provided on the ring portion 11 of the ring-type controller 1 are shown in this embodiment as an example, and the locations where they are provided may be designed arbitrarily. These locations may be arbitrarily designed for each type, for example, for the left hand only, the right hand only, or for both the left and right hands.

For example, in this embodiment, the ring-type controller 1 is shown as being worn on the user's left hand, but for example, the ring-type controller 1 according to this embodiment may be worn on the right hand and used with the same configuration, or a ring-type controller in which one or more locations (positions) of the proximity sensors 21 and 22 and the positioning portion 31 of the ring-type controller 1 according to this embodiment have been replaced with other locations may be worn on the right hand and used.

Furthermore, in this embodiment, the ring-type controller 1 is shown to include two proximity sensors 21 and 22 on the ring portion 11. However, as another configuration example, the ring-type controller may be implemented in which three or more proximity sensors are provided on the ring portion. That is, the ring-type controller may include at least two proximity sensors at different locations on the ring portion.

### (Second embodiment)

### [Ring-type controller]

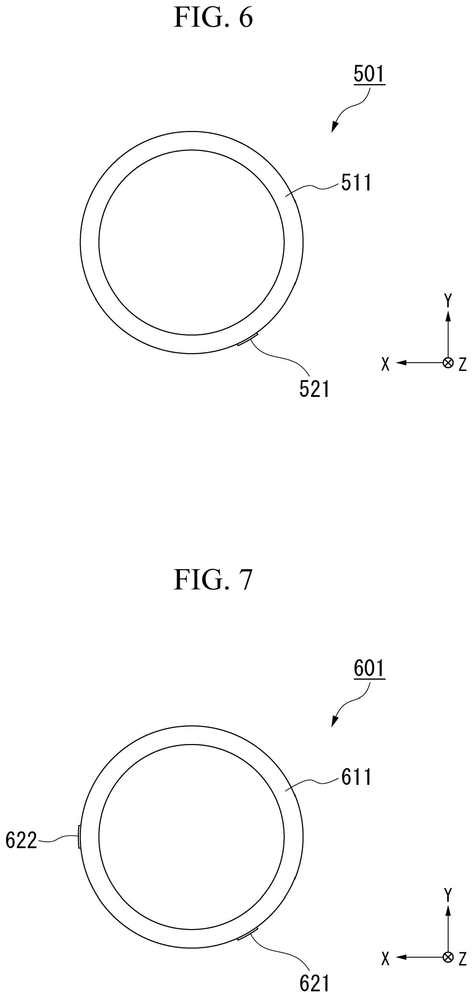

FIG. 6 is a diagram showing the schematic configuration of a ring-type controller 501 according to a second embodiment.

For convenience of description, FIG. 6 shows XYZ orthogonal coordinate axes, which are three-dimensional orthogonal coordinate axes. The ring-type controller 501 includes a ring portion 511 and a proximity sensor 521.

The proximity sensor 521 is disposed at a predetermined location on the outer peripheral side surface of the ring portion 511. The proximity sensor 521 has the same function as the proximity sensor 21 shown in FIG. 1.

The ring-type controller 1 has, for example, a configuration similar to that of the control circuit 211 shown in FIG. 2, in which the proximity sensor unit 231 includes a control circuit including one proximity sensor 521. The control circuit or host computer (device equivalent to host computer 212 shown in FIG. 2) identifies the user's operation on the basis of the detection results of the proximity sensor 521, or the detection results of the proximity sensor 521 and the detection results of the IMU sensor (sensor equivalent to IMU sensor 232 shown in FIG. 2).

Here, the ring-type controller 501 of this embodiment differs from the ring-type controller 1 of the first embodiment in that the ring-type controller includes one proximity sensor 521 (for example, the ring-type controller does not include two proximity sensors) and does not include a positioning portion.

In this embodiment, the ring portion 511 does not include a positioning portion, and the user places the ring-type controller 501 on a predetermined finger by referring to, for example, the position of the proximity sensor 521 provided on the ring portion 511.

As described above, in the ring-type controller 501 according to this embodiment, it is possible to simplify the user (human)'s operation.

The user can simplify the operation by, for example, bringing the finger wearing the ring-type controller 501 close to another finger.

### (Third embodiment)

### [Ring-type controller]

FIG. 7 is a diagram showing the schematic configuration of a ring-type controller 601 according to a third embodiment.

For convenience of description, FIG. 7 shows XYZ orthogonal coordinate axes, which are three-dimensional orthogonal coordinate axes. The ring-type controller 601 includes a ring portion 611 and two proximity sensors 621 and 622.

The proximity sensor 621 and the proximity sensor 622 are each disposed at a predetermined location on the outer peripheral side surface of the ring portion 611. As an example, these two proximity sensors 621 and 622 may be disposed in the same positions as the two proximity sensors 21 and 22 according to the first embodiment.

The proximity sensors 621 and 622 have the same functions as the proximity sensors 21 and 22 shown in FIG. 1, for example.

The ring-type controller 601 includes a control circuit having a configuration similar to that of the control circuit 211 shown in FIG. 2, for example.

The control circuit or host computer (device equivalent to host computer 212 shown in FIG. 2) identifies the user's operation on the basis of the detection results of the two proximity sensors 621 and 622, or the detection results of the two proximity sensors 621 and 622 and the IMU sensor (sensor equivalent to IMU sensor 232 shown in FIG. 2).

Here, the ring-type controller 601 according to this embodiment differs from the ring-type controller 1 according to the first embodiment in that the positioning portion is not provided.

In this embodiment, the ring portion 611 does not include a positioning portion, and the user places the ring-type controller 601 on a predetermined finger by referring to the positions of the proximity sensors 621 and 622 provided on the ring portion 611, for example.

As described above, in the ring-type controller 601 according to this embodiment, it is possible to simplify the user (human)'s operation.

The user can simplify the operation by, for example, bringing the finger wearing the ring-type controller 601 close to another finger.

Further, the user can simplify the operation by, for example, bringing the finger wearing the ring-type controller 1 close to two or more other fingers.

### [Regarding embodiments above]

Furthermore, a program for realizing the functions of any of the components in any of the above-described devices may be recorded on a computer-readable recording medium, and the program may be read into a computer system and executed. Furthermore, the term "computer system" here includes the operating system and hardware such as peripherals. Further, the "computer-readable recording medium" refers to a portable medium such as a flexible disk, optical magnetic disk, ROM, and CD (Compact Disc)-ROM (Read-Only Memory), as well as a storage device such as a hard disk built into a computer system. Furthermore, the "computer-readable recording medium" also includes those that retain a program for a certain period of time, such as volatile memory within a computer system that acts as a server or client when a program is transmitted via a network such as the Internet or a communication line such as a telephone line. The volatile memory may be, for example, a RAM (Random-Access Memory). The recording medium may be, for example, a non-transitory recording medium.

Further, the above program may be transmitted from a computer system storing the program in a storage device or the like to another computer system via a transmission medium or by a transmission wave in the transmission medium. Here, the "transmission medium" for transmitting the program refers to a medium having a function for transmitting information, such as a network such as the Internet or a communication line such as a telephone line.

Further, the above program may be for realizing a part of the above-described functions. Furthermore, the above-described program may be a so-called differential file that can realize the above-described functions in combination with a program already recorded in the computer system. The differential file may be called a differential program.

Further, the functions of any of the components in any of the above-described devices may be implemented by a processor. For example, each process in the embodiment may be realized by a processor that operates on the basis of information such as a program and a computer-readable recording medium that stores information such as the program. Here, in the processor, for example, the functions of each part may be realized by separate hardware, or the functions of each part may be realized by integrated hardware. For example, the processor may include hardware, which may include circuitry for processing digital signals and/or circuitry for processing analog signals. For example, the processor may be configured using one or more circuit devices mounted on a circuit board, or one or more circuit elements. An IC (Integrated Circuit) or the like may be used as the circuit device, and a resistor or a capacitor or the like may be used as the circuit element.

Here, the processor may be, for example, a CPU. However, the processor is not limited to a CPU, and various types of processors such as a GPU (Graphics Processing Unit) or a DSP (Digital Signal Processor) may be used. Further, the processor may also be a hardware circuit such as an ASIC (Application Specific Integrated Circuit). Further, the processor may be configured, for example, by a plurality of CPUs, or may be configured by a hardware circuit using a plurality of ASICs. Further, the processor may also be configured, for example, by a combination of multiple CPUs and a hardware circuit using multiple ASICs. Further, the processor may include, for example, one or more amplifier circuits or filter circuits for processing the analog signal.

The embodiments of this disclosure have been described in detail above with reference to the drawings, but the specific configuration is not limited to these embodiments, and includes designs within the scope that do not deviate from the gist of this disclosure.

### [Appendix]

[Configuration Example 1] to [Configuration Example 7] are shown.

### [Configuration Example 1]

A ring-type controller including:
a ring portion; and
a proximity sensor provided in the ring portion,
wherein the proximity sensor is disposed at a position where the distance between a predetermined first finger on which the ring portion is fitted and another second finger is detectable.

Therefore, in the ring-type controller, the user can easily perform operations with a simple action such as bringing the first finger and the second finger closer together. As for the user's finger operations, various instructions can be given by, for example, bringing the finger on which the ring-type controller is worn close to another finger (for example, the thumb), or by pointing two fingers at a predetermined target. Here, the first finger and the second finger may each be any finger.

Further, the ring-type controller may be adaptable to either or both the right and left hands.

Furthermore, in this embodiment, the ring-type controllers 1, 501, and 601 are examples of the ring-type controllers, the ring portions 11, 511, and 611 are examples of the ring portions, the proximity sensors 21, 22, 521, 621, and 622 are examples of the proximity sensors, the index finger F2 of the left hand H1 is an example of the first finger, and the thumb F1 or middle finger F3 is an example of the second finger.

### [Configuration Example 2]

The ring-type controller according to [Configuration Example 1],
wherein the second finger is disposed adjacent to the first finger.

Therefore, in the ring-type controller, the user can easily perform operations with a simple action such as bringing adjacent first and second fingers closer together.

### [Configuration Example 3]

The ring-type controller according to [Configuration Example 2],
wherein the first finger is an index finger, and the second finger is a thumb or middle finger.

Therefore, in the ring-type controller, the user can easily perform operations with a simple action such as bringing the index finger and the adjacent finger (thumb or middle finger) closer together.

### [Configuration Example 4]

The ring-type controller according to any one of [Configuration Example 1] to [Configuration Example 3], further including:
a second proximity sensor provided at a location different from the proximity sensor in the ring portion,
wherein the third finger is a finger different from the first finger and the second finger, and
wherein the second proximity sensor is disposed at a position where the distance between the first finger and the third finger is detectable.

Therefore, in the ring-type controller, the user can easily perform operations by combining a simple action such as bringing the first finger and the second finger closer together, and a simple action such as bringing the first finger and the third finger closer together.

Here, the first finger, second finger, and third finger may each be any finger.

### [Configuration Example 5]

The ring-type controller according to any one of [Configuration Example 1] to [Configuration Example 4],
wherein the ring portion includes a positioning portion indicating a wearing position on the first finger.

Therefore, in the ring-type controller, the user can easily recognize how to wear the ring-type controller by referring to the positioning portion.

Furthermore, in this embodiment, the positioning portion 31 is an example of the positioning portion.

### [Configuration Example 6]

The ring-type controller according to any one of [Configuration Example 1] to [Configuration Example 5], further including:
a microcontroller receiving distance information detected by the proximity sensor and also receiving information on detection values detected by one or both of an acceleration sensor and a gyro sensor; and
a battery supplying power to one or more of the proximity sensor, the acceleration sensor and the gyro sensor, and the microcontroller.

Therefore, in the ring-type controller, a process or control on the basis of the detection results of various sensors can be performed by a microcontroller (microcomputer), and, for example, information regarding the detection results of one or more sensors can be transmitted to an external device (for example, host computer 212).

Furthermore, in this embodiment, the IMU sensor 232 has the functions of an acceleration sensor and a gyro sensor, the microcomputer 237 is an example of a microcomputer, and the battery 234 is an example of a battery.

### [Configuration Example 7]

The ring-type controller according to [Configuration Example 6], further including:
a charging connector charging the battery; and
a wireless module transmitting and receiving data to and from the microcontroller.

Therefore, in the ring-type controller, the battery can be charged, and data can be transmitted and received from, for example, an external device (for example, the host computer 212).

Furthermore, in this embodiment, the charging connector 235 is an example of the charging connector, and the wireless module 233 is an example of the wireless module.

### [Configuration Example 8]

A wireless communication system including:
the ring-type controller according to [Configuration Example 7]; and
a host computer configured to communicate using the wireless module.

Therefore, in the wireless communication system, operation contents according to the hand operation of the user wearing the ring-type controller can be applied to various operations or controls through wireless communication between the host computer and the ring-type controller.

Furthermore, in this embodiment, the wireless communication system Q1 is an example of the wireless communication system.

### REFERENCE SIGNS LIST

1, 501, 601 Ring-type controller
11, 511, 611 Ring portion
21, 22, 521, 621, 622 Proximity sensor
31 Positioning portion
211 Control circuit
212 Host computer
213 Charger
231 Proximity sensor unit
232 IMU sensor
233 Wireless module
234 Battery
235 Charging connector
236 Battery control IC
237 Microcontroller (microcomputer)
311 Wall
331 Screen
351 Operation target
D1, D11 Direction
F1 Thumb
F2 Index finger
F3 Middle finger
H1 Left hand
Q1 Wireless communication system

## Claims

1. A ring-type controller comprising:
a ring portion; and
a proximity sensor provided in the ring portion,
wherein the proximity sensor is disposed at a position where a distance between a predetermined first finger on which the ring portion is fitted and another second finger is detectable.

2. The ring-type controller according to claim 1,
wherein the second finger is disposed adjacent to the first finger.

3. The ring-type controller according to claim 2,
wherein the first finger is an index finger and the second finger is a thumb or middle finger.

4. The ring-type controller according to any one of claims 1 to 3, further comprising:
a second proximity sensor provided at a location different from the proximity sensor in the ring portion,
wherein a third finger is a finger different from the first finger and the second finger, and
wherein the second proximity sensor is disposed at a position where a distance between the first finger and the third finger is detectable.

5. The ring-type controller according to any one of claims 1 to 3,
wherein the ring portion includes a positioning portion indicating a waring position on the first finger.

6. The ring-type controller according to any one of claims 1 to 3, further comprising:
a microcontroller receiving distance information detected by the proximity sensor and also receiving information on detection values detected by one or both of an acceleration sensor and a gyro sensor; and
a battery supplying power to one or more of the proximity sensor, the acceleration sensor and the gyro sensor, and the microcontroller.

7. The ring-type controller according to claim 6, further comprising:
a charging connector charging the battery; and
a wireless module transmitting and receiving data to and from the microcontroller.

8. A wireless communication system comprising:
the ring-type controller according to claim 7; and
a host computer configured to communicate using the wireless module.
